# EUROPÄISCHE PATENTSCHRIFT

(11) **EP 1 523 690 B1**
(45) Veröffentlichungstag und Bekanntmachung des Hinweises auf die Patenterteilung: **18.10.2006**
(21) Anmeldenummer: 03760641.5
(22) Anmeldetag: 18.06.2003
(51) Int. Cl.: G02B 6/38

(54) **ZWEIPOLIGER OPTISCHER STECKVERBINDER**
BIPOLAR OPTICAL CONNECTOR
CONNECTEUR OPTIQUE ENFICHABLE BIPOLAIRE

(30) Priorität: 22.06.2002 DE 10228008
(43) Veröffentlichungstag der Anmeldung: 20.04.2005
(73) Patentinhaber: Leopold Kostal GmbH & Co. KG, 58507 Lüdenscheid (DE)
(72) Erfinder: SCHERER, Thomas, 58515 Lüdenscheid (DE); HERINGHAUS, Wilfried, 44628 Herne (DE); MOHS, Wolfgang, 58640 Iserlohn (DE)
(86) Internationale Anmeldenummer: PCT/EP2003/006424
(87) Internationale Veröffentlichungsnummer: WO 2004/001473

(56) Entgegenhaltungen:
- EP-A- 0 647 865
- EP-A- 0 718 652
- EP-A- 0 996 011
- EP-A- 0 996 012
- "DUPLEX FIBER OPTIC CONNECTOR HOUSING" IBM TECHNICAL DISCLOSURE BULLETIN, IBM CORP. NEW YORK, US, Bd. 38, Nr. 9, 1. September 1995 (1995-09-01), Seiten 377-378, XP000540301 ISSN: 0018-8689

## Beschreibung

Die vorliegende Erfindung betrifft einen zweipoligen optischen Steckverbinder zum Verbinden zweier Lichtwellenleiter mit weiteren Lichtwellenleitern oder mit elektrooptischen Sende- und/oder Empfangseinrichtungen, umfassend ein zur Aufnahme zweier jeweils einen Lichtwellenleiter abschließender Faserendhülsen vorgesehenes Optikgehäuse.

Optische Steckverbinder werden benötigt, um Lichtwellenleiter miteinander zu verbinden oder um Lichtwellenleiter an mit optoelektronischen Wandlern ausgestattete Geräte anschließen zu können. Insbesondere im Automobilbereich werden mittels Lichtwellenleitern sogenannte Ringbusstrukturen aufgebaut, bei denen mehrere über einen Datenbus miteinander kommunizierende Geräte durch Lichtwellenleiter in einer ringförmigen Konfiguration verbunden sind. Dabei ist jedes Gerät mit einem zweipoligen Anschluß versehen, wobei dem einen Anschlußpol eine Sende- und dem anderen Anschlußpol eine Empfangsleitung zugeordnet ist. Die Sendeleitung des einen Geräts wird dabei zur Empfangsleitung des nächsten Geräts im Ring, so wie die Empfangsleitung dieses Geräts die Sendeleitung des im Ring davor liegenden Gerätes ist.

Die in einer solchen Konfiguration einzusetzenden Steckverbinder können wie in EP-A-718 652 vorteilhafterweise als zweipolige Steckverbinder ausgeführt werden. Aus Gründen der Handhabbarkeit kann die abschließende Konfektionierung der Steckverbinder mit den Lichtwellenleitern jedoch erst bei der endgültigen Montage des Ringbussystems erfolgen. Eine Vorkonfektionierung kann lediglich an einem Ende der Lichtwellenleiter erfolgen, da die jeweils anderen Enden der beiden in einem zweipoligen Steckverbinder aufgenommenen Lichtwellenleiter mit zwei unterschiedlichen, nämlich mit den beiden im Ring benachbarten Geräten verbunden werden. Um die Faserendhülsen und damit die empfindlichen Lichtwellenleiter-Endflächen dieser anderen Enden zu schützen müssen i.a. zusätzliche Schutzkappen oder dergleichen für den Transport bis zum Verbauen eingesetzt werden.

Die endgültige Konfektionierung direkt beim Zusammenbau der Ringleitung bringt zusätzlich eine Verwechslungsgefahr mit sich, da eine Kodierung des Steckverbinders lediglich bei dem bereits fertig montierten Teil erfolgen kann, die losen Enden, welche noch in die Steckverbinder für die benachbarten Geräte eingeführt werden müssen, können jedoch vertauscht werden. Man begegnet dieser Gefahr z.B. durch äußerliche Kennzeichnung der Steckverbinder mit aufgedruckten Pfeilsymbolen, die von der das System montierenden Person zu beachten sind.

Der optische Steckverbinder nach der vorliegenden Erfindung hat gegenüber dem dargestellten Stand der Technik den Vorteil, daß die Lichtwellenleiter bereits im Vorkonfektionierungszustand an beiden Enden mit Gehäuseteilen versehen sind, welche zum einen die empfindlichen Lichtwellenleiter-Endflächen schützen ohne das dazu zusätzliche Maßnahmen erforderlich wären und zum anderen die Gefahr einer Verwechslung völlig ausschließen.

Dies ist durch einem zweipoligen optischen Steckverbinder nach Anspruch 1.

Jeder einzelne Lichtwellenleiter kann so bereits in der Vorkonfektionierung an seinen beiden Enden mit jeweils einer der beiden unterschiedlichen Gehäusehälften versehen werden, welche vorteilhafterweise bereits Vorverrastungsmittel zum vorläufigen Verriegeln der in Steckrichtung von hinten in die Gehäusehälfte eingeführten Faserendhülse aufweisen, so daß eine Sicherung für den Transport gegeben ist.

Bei der Montage des Ringbusses müssen lediglich an jedem Gerät jeweils die zwei unterschiedlichen Gehäusehälften der von den beiden benachbarten Geräten herangeführten Lichtwellenleiter zusammengefügt werden.

Obwohl durch die unterschiedliche Ausführung der Gehäusehälften ein falscher Zusammenbau bereits verhindert ist, kann eine weitere Montageerleichterung z.B. durch unterschiedliche farbliche Kennzeichnung der Gehäusehälften wünschenswert sein.

Weitere vorteilhafte Ausgestaltungen des erfindungsgemäßen Gegenstandes sind in den weiteren Unteransprüchen angegeben und werden anhand des in der Zeichnung dargestellten Ausführungsbeispiels näher erläutert.

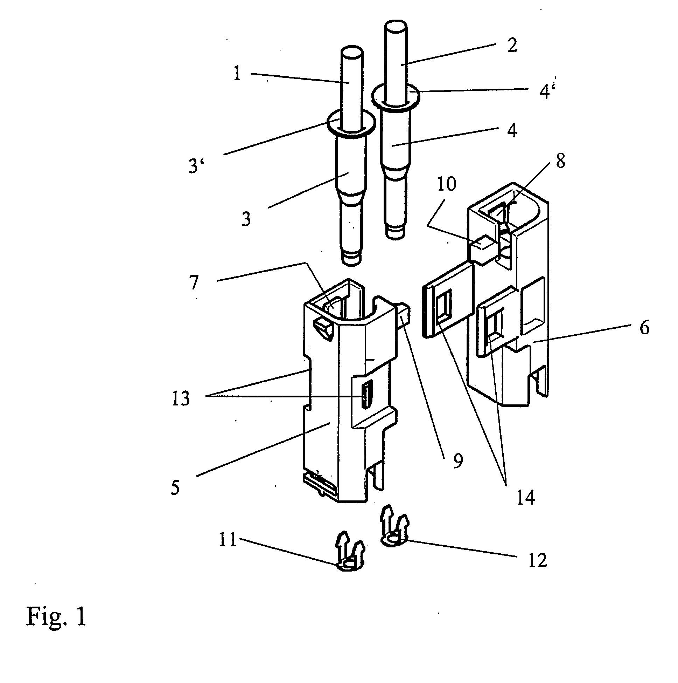

Dabei zeigt
- **Fig. 1**: eine Ansicht eines erfindungsgemäßen optischen Steckverbinders vor der Montage

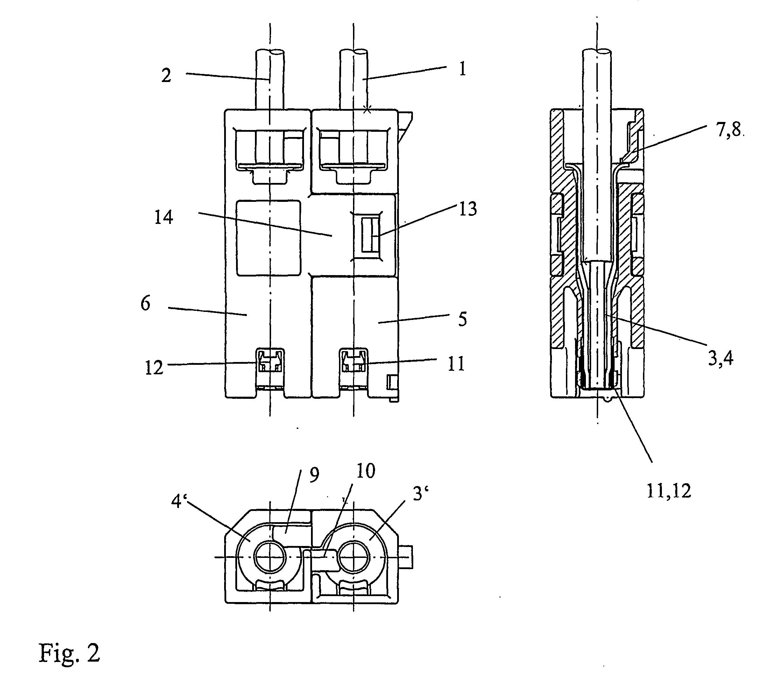

- **Fig. 2**: Ansicht und Schnittdarstellungen des fertig montierten optischen Steckverbinders der Fig. 1

Wie aus der Zeichnung ersichtlich, besteht der erfindungsgemäße zweipolige optische Steckverbinder aus einer ersten Gehäusehälfte 5 und einer zweiten Gehäusehälfte 6. Bei der Vorkonfektionierung eines Lichtwellenleiters 1, 2 werden die beiden Enden des Lichtwellenleiters mit jeweils einer Gehäusehälfte 5 der ersten und einer Gehäusehälfte 6 der zweiten Art versehen, indem die den Lichtwellenleiter 1, 2 an seinen Enden abschließenden Faserendhülsen 3, 4 in Steckrichtung des Steckverbinders von hinten in die jeweilige Gehäusehälfte 5, 6 eingeführt werden. Zur Erleichterung einer Kontrolle, daß tatsächlich jeder Lichtwellenleiter an seinen Enden zwei unterschiedliche Gehäusehälften 5, 6 aufweist, sind die beiden Arten der Gehäusehälften farblich unterschiedlich ausgeführt. Um die Gehäusehälften 5, 6 unverlierbar an den Lichtwellenleitern zu befestigen, sind diese mit Vorverrastungsmitteln in Form von Federarmen 7, 8 versehen, welche beim Einführen der Faserendhülse 3, 4 zurückweichen und in der Endstellung der Faserendhülse hinter einem auskragenden Bereich 3', 4' derselben einrasten und dort zur Anlage kommen.

Zur Einstellung eines definierten Abstandes zwischen der Lichtwellenleiter-Endfläche und dem entsprechenden Gegenstück, d.h. also einem weiteren Lichtwellenleiter oder einem optoelektronischen Element in einem Gegensteckverbinder, sind in den Gehäusehälften 5, 6 in ihrem vorderen Bereich Distanzhalter 11, 12 aufgenommen. Ein solcher Distanzhalter 11, 12 besteht im wesentlichen aus einem flachen Ring, dessen Innendurchmesser dem Durchmesser des Lichtwellenleiters entspricht und welcher mit seiner Ringfläche auf dem ringförmigen vorderen Rand der Faserendhülse 3, 4 aufliegt. Der Distanzhalter 11, 12 ist vorzugsweise aus Metall gefertigt, um die erforderliche hohe Präzision seines Dickenmaßes zu gewährleisten, und ist mit seitlich angebrachten und um 90° in Steckrichtung nach hinten abgewinkelten Halteärmchen versehen, mittels derer er in der jeweiligen Gehäusehälfte gehalten ist. Der Distanzhalter 11, 12 ist in der jeweiligen Gehäusehälfte 5, 6 mit Spiel aufgenommen und nimmt seine endgültige, einen definierten Abstand einstellende Lage erst im Zusammenwirken mit einem entsprechenden Gegenstück des Steckverbinders ein.

Bei der Montage der Ringleitung werden vor jedem Gerät jeweils zwei verschiedene Gehäusehälften 5, 6 zweier Lichtwellenleiter 1, 2 zu einem Steckverbinder vereinigt, indem die Gehäusehälften in einer senkrecht zur Steckrichtung verlaufenden Richtung zusammengefügt werden. Bei diesem Zusammenfügen kommen als Endverrastungsmittel 9, 10 dienende Riegel der jeweils einen Gehäusehälfte 5, 6 hinter dem auskragenden Bereich 4', 3' der in der jeweils anderen Gehäusehälfte 6, 5 aufgenommenen Faserendhülse 4, 3 zur Anlage und verriegeln diese so endgültig in ihrer Lage. In der Endstellung des fertig montierten Steckverbinders greifen miteinander kooperierende Clipselemente 13, 14 der beiden Gehäusehälften 5, 6 ineinander und verhindern so, daß die Hälften unbeabsichtigt wieder getrennt werden können.

## Patentansprüche

1. Zweipoliger optischer Steckverbinder zum Verbinden zweier Lichtwellenleiter (1, 2) mit weiteren Lichtwellenleitern oder mit elektrooptischen Sende- und/oder Empfangseinrichtungen mit einem zwei in ihrer äußerlichen Gestalt unterschiedliche, jeweils eine einen Lichtwellenleiter (1, 2) abschließende Faserendhülse (3,4) aufnehmende und in einer senkrecht zur Steckrichtung verlaufenden Montagerichtung zusammen fügbare Gehäusehälften (5, 6) umfassenden Optikgehäuse, **dadurch gekennzeichnet, daß** die Gehäusehälften (5, 6) jeweils Endverrastungsmittel (9, 10) zum endgültigen Verriegeln der Faserendhülsen (3, 4) aufweisen, wobei die Endverrastungsmittel (9, 10) der jeweils einen Gehäusehälfte (5, 6) die in der jeweils anderen Gehäusehälfte (5, 6) aufgenommene Faserendhülse (4, 3) beim fertig montierten Steckverbinder verriegeln.

2. Steckverbinder nach Anspruch 1, **dadurch gekennzeichnet, daß** die Gehäusehälften (5, 6) jeweils Vorverrastungsmittel zur vorläufigen Verriegelung der Faserendhülsen (3, 4) aufweisen.

3. Steckverbinder nach Anspruch 2, **dadurch gekennzeichnet, daß** die Vorverrastungsmittel durch Federarme (7, 8) gebildet sind, welche beim Einführen der Faserendhülse (3, 4) zurückweichen und in der Endstellung der Faserendhülse hinter einem auskragenden Bereich (3', 4') derselben einrasten und dort zur Anlage kommen.

4. Steckverbinder nach einem der Ansprüche 1 bis 3, **dadurch gekennzeichnet, daß** die zwei in ihrer äußerlichen Gestalt unterschiedlichen Gehäusehälften (5, 6) zur besseren Unterscheidbarkeit farblich unterschiedlich gestaltet sind.

5. Steckverbinder nach einem der Ansprüche 1 bis 4, **dadurch gekennzeichnet, daß** die Gehäusehälften (5, 6) Clipselemente (13, 14) aufweisen, die beim fertig montierten Steckverbinder mit entsprechenden Clipselementen (14, 13) der jeweils anderen Gehäusehälften (6, 5) kooperieren um ein unbeabsichtigtes Trennen der Hälften zu verhindern.

6. Steckverbinder nach einem der Ansprüche 1 bis 5, **dadurch gekennzeichnet, daß** zur Einstellung eines definierten Abstandes zwischen der Lichtwellenleiter-Endfläche und einem entsprechenden Gegenstück in den Gehäusehälften (5, 6) in ihrem vorderen Bereich Distanzhalter (11, 12) aufgenommen sind.

7. Steckverbinder nach Anspruch 6, **dadurch gekennzeichnet, daß** der Distanzhalter (11, 12) einen flachen, aus Metall gefertigten Ring umfaßt, welcher mit Spiel in der Gehäusehälfte (5, 6) aufgenommen ist.

## Claims

1. Bipolar optical plug-in connector for the purpose of connecting two optical fibres (1, 2) with other optical fibres or with electro-optical transmitting and/or receiving devices with an optical enclosure made up of two enclosure halves (5, 6) of different outer appearance that can be joined together in a direction of assembly extending vertical to the direction of plugging and with each enclosure half (5, 6) accommodating a fibre end sleeve (3, 4) terminating an optical fibre (1, 2) **characterised by** the fact that each of the enclosure halves (5, 6) comprises a final latching facility (9, 10) for conclusively latching the fibre end sleeves (3, 4), for which purpose the final latching facility (9, 10) of the one enclosure half (5, 6) latches the fibre end sleeve (4, 3) accommodated in the respective other enclosure half (5, 6) when the plug-in connector is completely assembled.

2. Plug-in connector in accordance with Claim 1, **characterised by** the fact that each of the enclosure halves (5, 6) comprises a preliminary latching facility for the provisional latching of the fibre end sleeves (3, 4).

3. Plug-in connector in accordance with Claim 2, **characterised by** the fact that the preliminary latching facility is formed by resilient arms (7, 8) which draw back when the fibre end sleeve (3, 4) is inserted and catch behind a projecting zone (3', 4') of the fibre end sleeve in the end position of the same, where they come to rest.

4. Plug-in connector in accordance with any of Claims 1 to 3, **characterised by** the fact that the two enclosure halves (5, 6), which differ in their outer form, are fashioned in divergent colours for the purpose of better differentiation.

5. Plug-in connector in accordance with any of Claims 1 to 4, **characterised by** the fact that the enclosure halves (5, 6) feature clip elements (13, 14) which, on the completely assembled plug-in connector, cooperate with corresponding clip elements (14, 13) in the respective other enclosure halves (6, 5) in order to prevent any unintentional separation of the halves.

6. Plug-in connector in accordance with any of Claims 1 to 5, **characterised by** the fact that spacers (11, 12) are accommodated in the front zone of the enclosure halves (5, 6) for the purpose of setting a defined distance between the end surface of the optical fibre and a corresponding counterpart.

7. Plug-in connector in accordance with Claim 6, **characterised by** the fact that the spacer (11, 12) consists of a flat ring composed of metal which is accommodated in the enclosure half (5, 6) with play.

## Revendications

1. Connecteur optique, bipolaire, pour la connexion entre deux guides d'ondes optiques (1, 2) et d'autres guides d'ondes optiques, ou des dispositifs émetteurs et / ou récepteurs électro-optiques, avec un boîtier d'optique comprenant deux demi-boîtiers (5, 6) d'aspect différent, recevant chacun un embout (3, 4) terminant un guides d'ondes optiques (1, 2) et pouvant être assemblés dans une direction de montage qui s'étend perpendiculairement à la direction d'introduction, **caractérisé en ce que** les demi-boîtiers (5, 6) présentent chacun des moyens de positionnement final (9, 10) pour la fixation définitive des embouts (3, 4) de fibres optiques, lesdits moyens de positionnement final (9, 10) du demi-boîtier (5, 6) concerné bloquant l'embout (4, 3) logé dans l'autre demi-boîtier (5, 6) dans le connecteur enfichable à l'état monté final.

2. Connecteur enfichable selon la revendication 1, **caractérisé en ce que** les demi-boîtiers (5, 6) présentent chacun des moyens de pré-positionnement pour la fixation provisoire des embouts (3, 4) des fibres optiques.

3. Connecteur enfichable selon la revendication 2, **caractérisé en ce que** les moyens de pré-positionnement sont formés par des bras élastiques (7, 8) qui s'escamotent lors de l'introduction de l'embout (3, 4) de fibre optique, et, dans la position finale dudit embout, s'enclenchent derrière une région en saillie (3', 4') de celui-ci et y prennent appui.

4. Connecteur enfichable selon l'une des revendications 1 à 3, **caractérisé en ce que** les deux demi-boîtiers (5, 6), d'apparence différente, sont de couleur différente pour mieux les différencier.

5. Connecteur enfichable selon l'une des revendications 1 à 4, **caractérisé en ce que** les demi-boîtiers (5, 6) présentent des éléments d'agrafage (13, 14) qui dans l'état monté final du connecteur enfichable coopèrent avec des éléments d'agrafage (14, 13) correspondants des autres demi-boîtiers (6, 5) respectifs pour empêcher une séparation par inadvertance des demi-boîtiers.

6. Connecteur enfichable selon l'une des revendications 1 à 5, **caractérisé en ce que**, pour l'ajustage d'un intervalle défini entre la surface finale des guides d'ondes optiques et de la contre-pièce correspondante, des écarteurs (11, 12) sont logés dans les demi-boîtiers (5, 6), dans leur région antérieure.

7. Connecteur enfichable selon la revendication 6, **caractérisé en ce que** L'écarteur (11, 12) comprend une baguer plate, fabriquée en métal, qui est accueillie, avec jeu, dans le demi-boîtier (5, 6).
